Europäisches Patentamt

European Patent Office

Office européen des brevets

(19)

(11)  EP 0 508 173 B1

(12)  EUROPÄISCHE PATENTSCHRIFT

(45) Veröffentlichungstag und Bekanntmachung des Hinweises auf die Patenterteilung:
16.10.1996  Patentblatt 1996/42

(51) Int Cl.6: **C08L 33/12**, C08L 25/12
// (C08L33/12, 25:12)

(21) Anmeldenummer: 92104743.7

(22) Anmeldetag: 19.03.1992

(54) **Thermoplastische transparente Formmassen auf PMMA-Basis mit erhöhter Spannungsrissbeständigkeit**

Thermoplastic, transparent moulding masses based on PMMA having increased stress-cracking resistance

Masse à mouler thermoplastique transparente à partir de PMMA ayant une résistance à la traction augmentée

(84) Benannte Vertragsstaaten:
AT BE DE ES FR GB IT NL

(30) Priorität: 08.04.1991  DE 4111282

(43) Veröffentlichungstag der Anmeldung:
14.10.1992  Patentblatt 1992/42

(73) Patentinhaber: BASF Aktiengesellschaft
67063 Ludwigshafen (DE)

(72) Erfinder:
• Besecke, Siegmund, Dr.
W-6104 Seeheim-Jugenheim (DE)
• Seitz, Friedrich, Dr.
W-6701 Friedelsheim (DE)
• Guentherberg, Norbert, Dr.
W-6500 Mainz 21 (DE)
• Zimmer, Guenter, Dr.
W-6500 Mainz 41 (DE)

(56) Entgegenhaltungen:
EP-A- 0 457 147        FR-A- 2 091 500
US-A- 4 083 896

**Beschreibung**

Die Erfindung betrifft die Verwendung von thermoplastischen transparenten Formmassen aus Styrol-Acrylnitril-Copolymeren und Polymethylmethacrylat zur Herstellung von Überzügen, Lacken oder Folien mit erhöhter Spannungsrißbeständigkeit auf Basis von Polymethylmethacrylat.

Polymethylmethacrylat ("PMMA") zeichnet sich bekanntermaßen im Vergleich zu anderen thermoplastischen Kunststoffen durch eine sehr gute Witterungsbeständigkeit, eine hohe Transparenz und eine hohe Oberflächenhärte aus. PMMA neigt aber in Gegenwart einer Reihe von Chemikalien wie Alkoholen zu Spannungsrißkorrosion mit zum Teil anschließendem Bruch.

Ein bekanntes Verfahren zur Verbesserung der Spannungsrißbeständigkeit besteht in der Copolymerisation von Methylmethacrylat ("MMA") mit solchen Comonomeren, deren Homopolymere hohe Spannungsrißbeständigkeiten aufweisen. Beispielsweise führt die Copolymerisation von MMA mit Acrylnitril ("AN") zu Copolymeren mit gegenüber reinem PMMA höheren Spannungsrißbeständigkeiten (s. Chemie, Physik und Technologie der Kunststoffe in Einzeldarstellungen, Band 9, Acryl- und Methacrylverbindungen, Springer Verlag, Berlin, 1967, S. 254f). In der Regel werden solche Copolymerisationen in Gegenwart von Vernetzern durchgeführt, um Eintrübungen durch Entmischungen zu verhindern. Ein wesentlicher Nachteil solcher Copolymerer ist aber deren mangelnde Fließfähigkeit, weshalb sie thermoplastisch nicht verarbeitbar sind. Ferner beobachtet man beim Tempern solcher copolymerer Formmassen unerwünschte Verfärbungen (s. Kunststoff-Handbuch, Band IX, "Polymethacrylate", Carl Hanser Verlag, München, 1975, S. 150 ff).

Aus der US-A-4,083,896 waren kautschukartige Mischungen aus 25 bis 55 Gew.-% eines Polymethylmethacrylates und 45 bis 75 Gew.-% eines Copolymeren aus Vinylaromaten und Vinylnitrilen zu entnehmen, die zur Herstellung von Teilen für Vorrichtungen oder Autoteilen verwendet werden.

Aufgabe der vorliegenden Erfindung war die Bereitstellung von thermoplastischen transparenten Formmassen auf PMMA-Basis zur Herstellung von Überzügen, Lacken oder Folien mit erhöhter Spannungsrißbeständigkeit.

Demgemäß wurden Formmassen aus Polymethylmethacrylat und Styrolacrylnitril-Copolymeren für die erfindungsgemäße Verwendung gefunden.

Transparente Mischungen (Blends) aus PMMA und Styrol-Acrylnitril-Copolymeren ("SAN") sind beispielsweise aus Polymer 28 (1987), 1177 bekannt.

Es wurde nun gefunden, daß bei SAN/PMMA-Blends bei Erhöhung des SAN-Gehalts eine überproportionale Zunahme der Spannungsrißbeständigkeit eintritt. Die Werte der Spannungsrißbeständigkeit der Blends liegen dabei höher als die entsprechenden Werte der reinen Komponenten.

Parallel dazu führt die Erhöhung des SAN-Gehalts jedoch zu einer stetigen Abnahme der Oberflächenhärte.

Die Formmassen sind daher solche, die eine hohe Oberflächenhärte und eine erhöhte Spannungsrißbeständigkeit aufweisen. Sie setzen sich aus folgenden Komponenten zusammen:

A) 55 bis 98, bevorzugt 60 bis 90 Gew.-% PMMA,

B) 2 bis 45, bevorzugt 10 bis 40 Gew.-% SAN und

C) 0 bis 5 Gew.% eines polymeren Verarbeitungshilfsmittels.

Als PMMA setzt man im allgemeinen reines PMMA oder bevorzugt ein Copolymer aus MMA und bis zu 20 Gew.-% eines eine Vinylgruppe tragenden Monomeren ein.

Solche vinylhaltigen Comonomere können Acrylate, Methacrylate, (Meth)acrylnitril, Styrol und dessen Derivate, Vinylcarboxylate, Maleinsäure, Maleinsäureanhydrid sowie Acrylsäure und Methacrylsäure und deren Amide oder Imide sein. Bevorzugt sind Acrylate und Methacrylate mit $C_1$-$C_4$-Alkyl-, $C_5$-$C_8$-Cycloalkyl-, oder alkylaromatischen sowie halogenierten $C_1$-$C_2$-Alkyl-Resten wie Methyl(meth)acrylat, Ethyl(meth)acrylat, n-Propyl(meth)acrylat, n-Butyl(meth)acrylat, Cyclopentyl(meth)acrylat, Cyclohexyl(meth)acrylat, Phenyl(meth)acrylat, Ethylphenyl(meth)acrylat, Benzyl(meth)acrylat, Trifluormethyl(meth)acrylat.

Als Komponente B) setzt man ein Copolymer bestehend aus

b1) 8 bis 30 Gew.-%, bevorzugt 15 bis 25 Gew.-%, besonders bevorzugt 18 bis 22 Gew.-% Acrylnitril,

b2) 70 bis 92 Gew.-%, bevorzugt 75 bis 85 Gew.-%, besonders bevorzugt 78 bis 82 Gew.-% eines vinylaromatischen Comonomers und

b3) 0 bis 22 Gew.-% mindestens eines weiteren Monomeren
ein.

Als vinylaromatische Monomere kann man Styrol sowie dessen einfach oder mehrfach kernsubstituierte Derivate, beispielsweise 4-Methylstyrol, 4-Ethylstyrol, 4-Isopropylstyrol, 3,4-Dimethylstyrol, 4-Chlorstyrol, 4-Bromstyrol, 3,4-Dichlorstyrol und $\alpha$-Methylstyrol einsetzen. Man verwendet dabei besonders bevorzugt Styrol.

Als weitere Monomere kann man beispielsweise $C_1$-$C_8$-Alkyl(meth)acrylate wie Methylacrylat, Ethylacrylat, n-Propylacrylat, n-Butylacrylat, n-Pentylacrylat, n-Hexylacrylat, n-Heptylacrylat, n-Octylacrylat, Methylmethacrylat, Ethylmethacrylat, n-Propylmethacrylat, n-Butylmethacrylat, tert.-Butylmethacrylat, n-Pentylmethacrylat, n-Hexylmethacrylat, bevorzugt Methylacrylat, Ethylacrylat, Methylmethacrylat, sowie Cyclohexyl(meth)acrylat, Maleinsäureanhydrid, Maleinsäureimide einsetzen. Der Einsatz weiterer Monomere ist in der Regel für eine Verbesserung der Spannungsrißbeständigkeit nicht notwendig, er kann jedoch in einigen Fällen von Vorteil sein.

Als weiteren Bestandteil C) kann man beispielsweise zur Verbesserung der Verarbeitungseigenschaften und der Polymerverträglichkeit statistische Copolymere oder Blockcopolymere dem Blend zusetzen, wobei diese Polymere in der Regel ein Molekulargewicht $\overline{M}_w$ im Bereich von 5.000 bis 100.000 aufweisen und im allgemeinen zu mehr als 50 Gew.-% aus MMA oder Styrol aufgebaut sind. Als weitere Comonomere kann man in der Regel die bei der Komponente A) genannten vinylhaltigen Comonomere einsetzen.

Die Herstellung der PMMA-Komponente führt man im allgemeinen in an sich bekannter Weise beispielsweise in Substanz, Lösung, Suspension oder Emulsion durch. Bei der Herstellung durch Substanzpolymerisation kann man öllösliche Initiatoren (Radikalstarter wie Diacylperoxide, Perester, Peroxydicarbonate, Hydroperoxide, Dialkylperoxide oder Azoverbindungen wie Azo-bis-isobutyronitril verwenden. Die Polymerisationstemperatur liegt im allgemeinen im Bereich von 20 bis 200°C, bevorzugt von 60 bis 160°C. Das Molekulargewicht kann man durch geeignete Kettenüberträger, beispielsweise Mercaptane, oder durch eine geeignete Temperaturführung regulieren. Im allgemeinen wählt man Molekulargewichte im Bereich von 20.000 bis 500.000, bevorzugt von 50.000 bis 150.000 g/mol (Gewichtsmittelwert des Molekulargewichts).

Die Herstellung der Polymerisate kann auch durch Lösungspolymerisation erfolgen. Geeignete Lösungsmittel sind beispielsweise Toluol, Xylol, Aceton oder Tetrahydrofuran. Im übrigen kann man die Polymerisation unter den für die Substanzpolymerisation geschilderten Bedingungen durchführen.

Die Herstellung der Polymerisate durch Suspensionspolymerisation führt man in der Regel in Gegenwart von Schutzkolloiden wie Polyvinylpyrrolidon, Polymethacrylsäure, Polyvinylalkohol oder Methylcellulose durch.

Als Initiatoren kann man in der Regel die für die Substanzpolymerisation beschriebenen öllöslichen Radikalstarter einsetzen. Die Reaktionstemperatur wählt man hierbei im allgemeinen im Bereich von 60 bis 160°C.

Bei der Herstellung durch Emulsionspolymerisation führt man die Reaktion zweckmäßigerweise bei Temperaturen im Bereich von 20 bis 120°C durch. Als Initiatoren kann man thermisch zerfallende wasserlösliche Initiatoren wie Natriumperoxodisulfat oder Ammoniumperoxodisulfat oder auch Redox-Systeme wie tert.-Butylhydroperoxid/Natriumformaldehydsulfoxylat verwenden. Als Emulgatoren setzt man in der Regel die üblichen Verbindungen ein, wie die Alkalimetallsalze von Fettsäuren, Natriumalkylsulfonate oder o-Dodecyldiphenyletherdisulfonat.

Nähere Ausführungen hierzu finden sich beispielsweise in Kunststoff-Handbuch, Band IX, "Polymethacrylate", Carl Hanser Verlag, München, 1975, S. 15 ff, 31 ff).

Die Herstellung der SAN-Komponente führt man in der Regel nach bekannten Methoden durch, beispielsweise nach den Lehren der DE-B-1 001 001 und DE-B-1 003 436, so daß sich nähere Angaben hierzu erübrigen. Dabei wählt man den Bereich der Molekulargewichte im allgemeinen von 10.000 bis 500.000, bevorzugt von 50.000 bis 250.000.

Die Herstellung der Komponente C) führt man in der Regel durch radikalische Polymerisation in Emulsion, Suspension, Lösung oder Substanz durch (s. Kunststoff-Handbuch, Bd. V, "Polystyrol", Carl Hanser Verlag, München, 1975, S. 118 ff, und dito, Bd. IX, S. 15 ff, 31 ff).

Neben den wesentlichen Komponenten A), B) und C) können die Formmassen übliche Zusatzstoffe und Verarbeitungshilfsmittel enthalten. Deren Anteil beträgt in der Regel bis zu 5, vorzugsweise bis zu 2 Gew.-%, bezogen auf das Gesamtgewicht der Komponenten A) bis C).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe, Pigmente, Weichmacher, Antistatika und Flammschutzmittel.

Oxidationsverzögerer und Wärmestabilisatoren, die den thermoplastischen Massen gemäß der Erfindung zugesetzt werden können, sind z.B. sterisch gehinderte Phenole, Hydrochinone, Phosphite und Abkömmlinge und substituierte Vertreter dieser Gruppe und Mischungen dieser Verbindungen, vorzugsweise in Konzentrationen bis zu 1 Gew.-%, bezogen auf das Gewicht der Mischung.

Beispiele für UV-Stabilisatoren sind substituierte Resorcine, Salicylate, Benzotriazole und Benzophenone, die man im allgemeinen in Mengen bis zu 1 Gew.-% einsetzen kann. Gleit- und Entformungsmittel, die man in der Regel bis zu 1 Gew.-% der thermoplastischen Masse zusetzen kann, sind beispielsweise Stearinsäure, Stearylalkohol, Stearinsäurealkylester und -amide sowie Ester des Pentaerythrits mit langkettigen Fettsäuren. Geeignete Farbstoffe sind organische Farbstoffe, beispielsweise Anthrachinonrot, organische Pigmente und Lacke wie Phthalocyaninblau, anorganische Pigmente wie Titandioxid, Cadmiumsulfid. Als Weichmacher seien Dioctylphthalat, Dibenzylphthalat und Butylbenzylphthalat genannt.

Als Flammschutzmittel kann man beispielsweise eine phosphorhaltige Verbindung in Mengen von 5 bis 25 Gew.-% (bezogen auf das Gesamtgewicht) einsetzen.

Solche Flammschutzmittel sind beispielsweise organische Phosphorverbindungen wie die Ester der Phosphorsäure, phosphorigen Säure und von Phosphon- und Phosphinsäure sowie tertiäre Phosphine und Phosphinoxide. Als Beispiel sei Triphenylphosphinoxid genannt.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureamide, Phosphinsäureamide, Tris(aziridinyl)-phosphinoxid oder Tetrakis-(hydroxymethyl)-phosphoniumchlorid.

Die Zugabe der Zusatzstoffe kann man in jeder Stufe der Herstellung durchführen, zweckmäßig gibt man die Stabilisatoren frühzeitig zu, um die Formmasse schon zu Beginn schützen zu können. In übereinstimmung damit, gibt man im allgemeinen die Stabilisatoren schon während des Polymerisationsverfahrens zu, soweit sie dieses Verfahren nicht stören.

Die Herstellung der Formmassen führt man in der Regel nach an sich bekannten Verfahren durch, indem man die Ausgangskomponenten in üblichen Mischvorrichtungen entweder in der Schmelze wie in Schneckenextrudern, statischen Mischern oder Knetern mischt und anschließend austrägt, oder in fester Form die Komponenten in Brabender- oder Banbury-Mischer einbringt und dort unter Aufschmelzen mischt und anschließend extrudiert. Danach kühlt man die Formmasse im allgemeinen ab und zerkleinert sie. Die Mischtemperaturen wählt man in der Regel im Bereich von 170 bis 350°C, bevorzugt von 200 bis 300°C. Man kann auch die Komponenten als Dispersion herstellen, sie in dieser Form mischen, gemeinsam fällen und entwässern, und dann, wie oben beschrieben, mittels Extruder oder Kneter weiterverarbeiten.

Die Formmassen kann man nach üblichen Methoden weiterverarbeiten, z.B. durch Spritzguß, Extrusion oder Sintern zur Herstellung von Formteilen oder Halbzeug oder aber als Schutzschicht anwenden, beispielsweise dadurch, daß man sie durch Coextrusion oder als Lack auf eine zu schützende Trägermasse aufbringt.

Die so erhältlichen Formmassen haben den Vorteil gegenüber reinen PMMA-Formmassen, daß sie, bei sonst weitgehend gleichen Produkteigenschaften (s. Tabelle 2), eine erhöhte Spannungsripbeständigkeit und eine hohe Oberflächenhärte aufweisen (s. Tabelle 1).

Die Formmassen eignen sich daher zur Herstellung vom Überzügen auf verschiedenen Unterlagen, bevorzugt auf Kunststoffen wie SAN-, ABS-, ASA-Copolymerisate sowie Polycarbonate und Polyester. Sie eignen sich beispielsweise auch zur Herstellung lösungsmittelresistenter Folien und von Lackrohstoffen.

Beispiele 1 bis 5

Für die folgenden Beispiele wurden als Komponente A) ein Copolymer gebildet aus 99 Gew.-% Methylmethacrylat und 1 Gew.-% Methylacrylat mit einer Viskositätszahl von 72 (gemessen in Chloroform nach DIN 7745) und als Komponente B) ein Copolymer gebildet aus 81 Gew.-% Styrol und 19 Gew.-% Acrylnitril (Viskositätszahl 95, gemessen in Dimethylformamid nach DIN 53 726) verwendet.

Die beiden Komponenten wurden entsprechend ihrem Mischungsverhältnis mit einem Durchsatz von 160 kg/h in einem Einschneckenextruder (Fa. Prodex; Schneckendurchmesser 11,4 cm (4,5 Zoll); Länge:Durchmesser = 30) bei einer Temperatur von 275°C aufgeschmolzen und bei 140 U/min vermischt. Die jeweilige Mischung wurde als Strang ausgetragen, gekühlt und granuliert.

Anschließend wurde jeweils ein Teil der Granulate auf einer Spritzgußmaschine (Allrounder, Fa. Arburg) bei einem Druck von 45 kN und einer Temperatur von 235°C zu Schulterstäben, wie sie für Festigkeitsmessungen nach DIN 53 455 verwendet werden, verspritzt.

Zur Qualitätsprüfung wurden die folgenden Eigenschaften gemessen:

- Oberflächenhärte nach DIN 53 799

- Vicat-Erweichungstemperatur B/50 (°C) nach DIN 53 460

- Lichttransmission nach DIN 5063-T3 an 3 mm dicken Platten

- Zugfestigkeit nach DIN 53 455

- Reißfestigkeit nach DIN 53 455

- Elastizitätsmodul nach DIN 53 457

- Schmelzindex (MFI, 230°C, 3,8 kp) nach DIN 53 735

- Spannungsrißbeständigkeit.

Für die Prüfung der Spannungsrißbeständigkeit diente eine Vorrichtung (s. Figur), in die ein Normschulterstab mit den Maßen

- Länge 149 mm (nach der Temperung; vor der Temperung: 150 mm)
- Breite 20 mm (am Ende)
- Breite 10 mm (Stabmitte)
- Höhe 4 mm

an einem Ende horizontal fixiert wurde. Eine Auflagestelle, bestehend aus einem senkrecht zur Längsrichtung und parallel zur Querrichtung des Prüfkörpers angeordneten Stab (Durchmesser 5 mm) in einer Entfernung von 70 mm vom fixierten Ende des Prüfkörpers, diente als zweite Halterung.

Am freien Ende des Prüfkörpers wurde ein Gewicht von 509 g angebracht. Damit wurde an der Auflagestelle des Stabes eine Biegespannung ($\sigma_B$) von $\sigma_B = 147,87$ N/cm$^2$ erzeugt. Die Berechnung erfolgte nach

$$\sigma_B = \frac{F \cdot l \cdot 6}{b \cdot h^2}$$

(aus Technische Formelsammlung, K. Gieck-Verlag, Heilbronn, 1972, S. P3)
wobei

$\sigma_B =$    Biegespannung in N/cm$^2$
$b =$    Probenbreite in cm (gemessen in der Mitte der Schulterstäbe)
$h =$    Höhe der Probe
$l =$    Stützweite in cm
$F =$    Kraft in N = 509 g * 980,665 *10$^{-5}$ N/g = 4,9916 N

Vor dem Test wurden die Schulterstäbe 20 h bei einer Temperatur von 10°C unterhalb ihrer Vicat-Temperaturen (Luft) in einem mit Silicagel enthaltenden Trockenschrank getempert, um spannungsfreie Schulterstäbe zu erhalten. Nach der Temperung wurden die Probestücke auf die Meßtemperatur von 23°C in einem Silicagel enthaltenden Exsikkator abgekühlt und bis zur Messung dort aufbewahrt.

Die so vorbehandelten Prüfkörper wurden zuerst 10 min mit der oben angegebenen Kraft belastet und dann, unter weiterer Belastung, mit Isopropanol p.a. (Fa. Merck) zur Erzeugung der Spannungskorrosion versetzt.

Das Isopropanol wurde dabei auf die Oberfläche des beanspruchten Teils des Schulterstabes in Höhe des Auflagestabes aufgebracht. Um einen guten Kontakt des Prüfmediums mit der Kunststoffoberfläche zu gewährleisten, wurde an dieser Stelle ein Filterpapierstück der Länge 1 cm und der Breite 1 cm gelegt. Dieses Filterpapier wurde während des Meßzeitraumes mit Isopropanol als Prüfflüssigkeit stets feucht gehalten.

Gemessen wurde der Zeitraum zwischen dem Beginn des Anfeuchtens und dem Auftreten des ersten Spannungsrisses. Jeweils 10 Prüfkörper der jeweiligen Mischungen wurden für eine Testreihe eingesetzt. Von den gemessenen Zeiten wurde jeweils der arithmetische Mittelwert gebildet.

Die Ergebnisse sind in Tabelle 1 zusammengefaßt.

Tabelle 1:

| Spannungsrißbeständigkeiten von PMMA/SAN-Blends | | | | |
|---|---|---|---|---|
| Beispiel | Zusammensetzung des Blends (Gew.-%) | | Oberflächenhärte (N) | Spannungsrißbildung (min) |
| | PMMA | SAN | | |
| 1 | 0,90 | 0,10 | 1,2 | 3,2 |
| 2 | 0,75 | 0,25 | 1,0 | 5,0 |
| 3 | 0,65 | 0,35 | 0,9 | 5,5 |
| 4 | 0,50 | 0,50 | 0,7 | 2,1 |

Tabelle 1:   (fortgesetzt)

| Spannungsrißbeständigkeiten von PMMA/SAN-Blends | | | | |
|---|---|---|---|---|
| Beispiel | Zusammensetzung des Blends (Gew.-%) | | Oberflächenhärte (N) | Spannungsrißbildung (min) |
| | PMMA | SAN | | |
| zum Vergleich | | | | |
| 5 | 1,00 | 0,00 | 1,3 | 1,5 |
| 6 | 0,00 | 1,00 | 0,4 | 0,9 |

Tabelle 2:

| Produkteigenschaften eines PMMA-SAN-Blends im Vergleich zu einer PMMA-Formmasse | | |
|---|---|---|
| Eigenschaft | Beispiel 2 | Vergleichsbeispiel 5 |
| Vicat-Erweichungstemperatur B/50 (°C) DIN 53 460 | 106 | 107 |
| Lichttransmission (3 mm, %) DIN 5036-T3 | 90 | 92 |
| Ritzhärze (N) DIN 53 799 | 1,0 | 1,3 |
| Zugfestigkeit (N/mm$^2$) DIN 53 455 | 78 | 75 |
| Reißfestigkeit (N/mm$^2$) DIN 53 455 | 76 | 74 |
| E-Modul (N/mm$^2$) DIN 53 457 | 3500 | 3300 |
| MFI (g/10 min) DIN 53 735 | 1,0 | 0,85 |

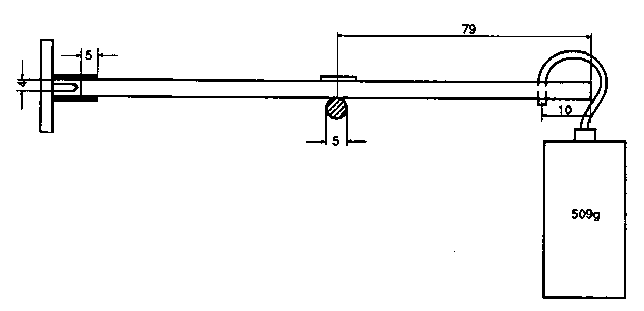

**Patentansprüche**

1.   Verwendung von Formmassen aus

A) 55 bis 98 Gew.-% eines Polymethylmethacrylats,

B) 2 bis 45 Gew.-% eines Copolymeren aus

b1) 8 bis 30 Gew.-% Acrylnitril,
b2) 70 bis 92 Gew.-% eines vinylaromatischen Comonomeren und
b3) 0 bis 22 Gew.-% mindestens eines weiteren Monomeren und

C) 0 bis 5 Gew.-% eines polymeren Verarbeitungshilfsmittels zur Herstellung von Überzügen, Lacken oder Folien.

2.   Verwendung von Formmassen aus

A) 55 bis 98 Gew.-% eines Polymethylmethacrylats,

B) 2 bis 45 Gew.-% eines Copolymeren aus

b1) 8 bis 30 Gew.-% Acrylnitril,
b2) 70 bis 92 Gew.-% eines vinylaromatischen Comonomeren und
b3) 0 bis 22 Gew.-% mindestens eines weiteren Monomeren und

C) 0 bis 5 Gew.-% eines polymeren Verarbeitungshilfsmittels zur Herstellung von coextrudierten Formteilen oder Halbzeugen.

3.   Verwendung nach Anspruch 1 oder 2 von Formmassen aus

60 bis 90 Gew.-% eines Polymethylmethacrylats A,
10 bis 40 Gew.-% eines Copolymeren B und
0 bis 5 Gew.-% eines polymeren Verarbeitungshilfsmittels C.

4.  Verwendung nach einem der Ansprüche 1 bis 3 von Formmassen, in denen die Komponente A ein Copolymeres aus Methylmethacrylat und bis zu 20 Gew.-% Methylacrylat ist.

5.  Verwendung nach einem der Anprüche 1 bis 4 von Formmassen,in denen das Copolymere B aus

    b1) 18 bis 22 Gew.-% Acrylnitril,
    b2) 78 bis 82 Gew.-% eines vinylaromatischen Comonomeren und
    b3) 0 bis 22 Gew.-% mindestens eines weiteren Monomeren

besteht.

6.  Verwendung nach einem der Ansprüche 1 oder 3 bis 5 zur Herstellung von Überzügen für Unterlagen aus SAN-, ABS-, oder ASA-Copolymerisaten, Polycarbonaten oder Polyestern.

7.  Verwendung nach einem der Ansprüche 1 oder 3 bis 5 zur Herstellung von coextrudierten Schutzschichten.


## Claims

1.  Use of molding materials comprising

    A) from 55 to 98% by weight of a polymethyl methacrylate,
    B) from 2 to 45% by weight of a copolymer of

        b1) from 8 to 30% by weight of acrylonitrile,
        b2) from 70 to 92% by weight of a vinylaromatic comonomer and
        b3) from 0 to 22% by weight of at least one further monomer and

    C) from 0 to 5% by weight of a polymeric processing assistant

for the production of coatings, finishes or films.

2.  Use of molding materials comprising

    A) from 55 to 98% by weight of a polymethyl methacrylate,
    B) from 2 to 45% by weight of a copolymer of

        b1) from 8 to 30% by weight of acrylonitrile,
        b2) from 70 to 92% by weight of a vinylaromatic comonomer and
        b3) from 0 to 22% by weight of at least one further monomer and

    C) from 0 to 5% by weight of a polymeric processing assistant

for the production of coextruded shaped articles of semifinished products.

3.  Use as claimed in claim 1 or 2 of molding materials comprising

    from 60 to 90% by weight of a polymethyl methacrylate A,
    from 10 to 40% by weight of a copolymer B and
    from 0 to 5% by weight of a polymeric processing assistant C.

4.  Use as claimed in any of claims 1 to 3 of molding materials in which the component A is a copolymer of methyl methacrylate and up to 20% by weight of methyl acrylate.

5. Use as claimed in any of claims 1 to 4 of molding materials in which the copolymer B consists of

> b1) from 18 to 22% by weight of acrylonitrile,
> b2) from 78 to 82% by weight of a vinylaromatic comonomer and
> b3) from 0 to 22% by weight of at least one further monomer.

6. Use as claimed in any of claims 1 or 3 to 5 for the production of coatings for substrates comprising SAN, ABS or ASA copolymers, polycarbonates or polyesters.

7. Use as claimed in any of claims 1 or 3 to 5 for the production of coextruded protective layers.


**Revendications**

1. Utilisation de masses à mouler composées de

> A) 55 à 98% en poids d'un polyméthacrylate de méthyle,
> B) 2 à 45% en poids d'un copolymère de

> > b1) 8 à 30% en poids d'acrylonitrile,
> > b2) 70 à 92% en poids d'un comonomère vinylaromatique et
> > b3) 0 à 22% en poids d'au moins un autre monomère et

> C) 0 à 5% en poids d'un adjuvant polymère de mise en oeuvre,

> pour la confection de revêtements, de laques ou de feuilles.

2. Utilisation de masses à mouler composées de

> A) 55 à 98% en poids d'un polyméthacrylate de méthyle,
> B) 2 à 45% en poids d'un copolymère de

> > b1) 8 à 30% en poids d'acrylonitrile,
> > b2) 70 à 92% en poids d'un comonomère vinylaromatique et
> > b3) 0 à 22% en poids d'au moins un autre monomère et

> C) 0 à 5% en poids d'un adjuvant polymère de mise en oeuvre,

> pour la fabrication de pièces moulées et de produits semi-finis co-extrudés.

3. Utilisation, selon la revendication 1 ou 2, de masses à mouler composées de

> 60 à 90% en poids d'un polyméthacrylate de méthyle A,
> 10 à 40% en poids d'un copolymère B et
> 0 à 5% en poids d'un adjuvant polymère de mise en oeuvre C.

4. Utilisation, selon l'une quelconque des revendications 1 à 3, de masses à mouler dans lesquelles le composant A est un copoiymère de méthacrylate de méthyle et d'acrylate de méthyle dans une proportion allant jusqu'à 20% en poids.

5. Utilisation, selon l'une quelconque des revendications 1 à 4, de masses à mouler dans lesquelles le copolymère B se compose de

> b1) 18 à 22% en poids d'acrylonitrile,
> b2) 78 à 82% en poids d'un comonomère vinylaromatique et
> b3) 0 à 22% en poids d'au moins un autre monomère.

6. Utilisation selon l'une quelconque des revendications 1 ou 3 à 5 pour la confection de revêtements pour des substrats en copolymères SAN, ABS ou ASA, en polycarbonates ou en polyesters.

7. Utilisation selon l'une quelconque des revendications 1 ou 3 à 5 pour la confection de couches protectrices co-extrudées.